# EUROPÄISCHE PATENTANMELDUNG

(11) **EP 1 986 307 A2**
(43) Veröffentlichungstag der Anmeldung: **29.10.2008**
(21) Anmeldenummer: 08101570.3
(22) Anmeldetag: 13.02.2008
(51) Int. Cl.: H02K 7/08

(54) **Anlaufpilz sowie Elektromotor mit Anlaufpilz**

(30) Priorität: 13.04.2007 DE 102007018037
(71) Anmelder: Robert Bosch GmbH, 70442 Stuttgart (DE)
(72) Erfinder: Goedecke, Martin, 77815, Buehl (DE); Schroeder, Patrick, 77815, Buehl (DE)

(57) **Zusammenfassung**

Die Erfindung betrifft einen Anlaufpilz (1) mit einer stirnseitigen Anlauffläche (8) zum Abstützen einer Welle (4), insbesondere einer Ankerwelle eines Elektromotors, an einer Abstützfläche (9). Erfindungsgemäß ist vorgesehen, dass der Anlaufpilz (1) mindestens eine Fetttasche (10) aufweist.

## Beschreibung

### Stand der Technik

Die Erfindung betrifft einen Anlaufpilz gemäß dem Oberbegriff des Anspruchs 1 sowie einen Elektromotor gemäß Anspruch 9.

Aus der DE 91 02 047 U1 ist ein Elektromotor bekannt, dessen Ankerwelle an beiden Endstirnflächen mit jeweils einem Anlaufpilz versehen ist. Die ballig ausgeführten Anlaufpilze dienen zum drehenden Abstützen der Ankerwelle an jeweils einer Abstützfläche des Polgehäuses.

Um die Gleitreibung zwischen der Anlauffläche des Anlaufpilzes und der Abstützfläche zu minimieren und gleichzeitig die Haftreibung zum Zweck einer verbesserten Selbsthemmung des Motors zu erhöhen, ist es bekannt, zwischen die Anlauffläche und die Abstützfläche Fett einzubringen. Durch die hohe Drehzahl der Ankerwelle, von beispielsweise 5500 Umdrehungen pro Minute und aufgrund der von der Ankerwelle auf die Abstützfläche aufgebrachten Axialkraft wird ein Großteil des Fettes nach außen geschleudert und steht nicht mehr im Kontaktbereich zwischen Anlauffläche und Abstützfläche zur Verfügung. Dies führt zum einen zu einer schlechteren dynamischen Selbsthemmung des Motors und verändert zum anderen die Motorkennlinie.

### Offenbarung der Erfindung

### Technische Aufgabe

Der Erfindung liegt die Aufgabe zugrunde, einen Anlaufpilz vorzuschlagen, der über einen langen Zeitraum zumindest näherungsweise konstante Reibwerte sicherstellt. Ferner besteht die Aufgabe darin, einen mit einem Anlaufpilz ausgestatteten Elektromotor vorzuschlagen, dessen Motorkennlinie sowie dessen Selbsthemmung über einen langen Zeitraum zumindest näherungsweise konstant sind.

### Technische Lösung

Hinsichtlich des Anlaufpilzes wird die Aufgabe mit den Merkmalen des Anspruchs 1 und hinsichtlich des Elektromotors mit den Merkmalen des Anspruchs 9 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder in der Zeichnung offenbarten Merkmalen.

Der Erfindung liegt der Gedanke zugrunde, den Anlaufpilz derart auszuformen, dass mindestens eine Fetttasche zur Aufnahme von Fett gebildet ist. Durch die Unterbringung eines Fettvorrates in den Anlaufpilz, insbesondere in unmittelbarer Nähe zur Anlauffläche, kann eine Versorgung des Kontaktbereichs zwischen Anlauffläche und Abstützfläche über einen langen Zeitraum mit Fett sichergestellt werden. Die Fetttasche sollte bevorzugt derart dimensioniert werden, dass der Fettvorrat zur Versorgung des Kontaktbereichs über die gesamte Lebensdauer einer mit dem Anlaufpilz ausgestatteten Vorrichtung ausreicht. Gegebenenfalls kann der Anlaufpilz derart in der Vorrichtung angeordnet werden, dass ein Wiederbefüllen der Fetttasche mit Fett möglich ist. Durch das erfindungsgemäße Vorsehen einer dauerhaften Fettversorgung sind die Haftreibung zwischen einer mit dem Anlaufpilz ausgestatteten Welle und einer Abstützfläche sowie die Gleitreibung während des Betriebs über einen langen Zeitraum zumindest näherungsweise konstant. Es hat sich als vorteilhaft herausgestellt, den Anlaufpilz aus Gewichts- und Kostengründen als Spritzgussteil oder Pressformteil aus Kunststoff auszubilden.

In Ausgestaltung der Erfindung ist mit Vorteil vorgesehen, dass die Fetttasche benachbart zur Anlauffläche angeordnet ist. Dabei ist es beispielsweise denkbar, mehrere voneinander getrennte Fetttaschen innerhalb der Anlauffläche oder randseitig der Anlauffläche anzuordnen. Die Anordnung der Fetttasche in unmittelbarer Nähe zur Anlauffläche gewährleistet eine gleichbleibende Versorgung der Anlauffläche und damit des Kontaktbereichs mit Fett.

Von besonderem Vorteil ist eine Ausführungsform, bei der die Fetttasche als, insbesondere stirnseitige, Ringnut ausgebildet ist, wobei über die Wahl der Ringnutbreite und/oder der Ringnuttiefe Einfluss auf das Speichervolumen der Fetttasche genommen werden kann. Bevorzugt ist die Ringnut in einen im Wesentlichen scheibenförmigen Kappenabschnitt des Anlaufpilzes eingebracht.

Aus Symmetriegründen zur Vermeidung einer Unwucht ist in Ausgestaltung der Erfindung mit Vorteil vorgesehen, dass die Ringnut die zentrische Anlauffläche radial außen umschließt. Dabei ist eine Ausführungsform bevorzugt, bei der sich die Anlauffläche ausschließlich radial innerhalb der ringförmigen Fetttasche befindet.

Aus Gründen der Minimierung des Reibradius der Anlauffläche ist es von Vorteil, die Anlauffläche ballig, also im Wesentlichen konvex, auszuformen.

Im Falle des Vorsehens einer ringförmigen Fetttasche ist es von Vorteil, wenn die Fetttasche radial außen von einem in Umfangsrichtung geschlossenen Umfangswulst begrenzt ist. Dabei sollte die Axialerstreckung des Umfangswulstes ausreichend groß gewählt werden, um ein fliehkraftbedingtes Abschleudern von Fett aus der Fetttasche zu verhindern bzw. zu minimieren. Die Axialerstreckung des Umfangwulstes in Richtung der der Anlauffläche gegenüberliegenden Abstützfläche sollte jedoch die Axialerstreckung der Anlauffläche nicht übersteigen, da ansonsten der Umfangswulst selbst als Anlauffläche mit einem großen Reibradius fungieren würde. Bevorzugt ist die Axialerstreckung des Umfangswulstes daher geringfügig kleiner, beispielsweise um 0,1 mm kleiner, als die Axialerstreckung der Anlauffläche.

Von besonderem Vorteil ist dabei eine Ausführungsform, bei der der Umfangswulst in radialer Richtung nach innen angefast ist, unter anderem um das Speichervermögen der Fetttasche zu vergrößern.

Um eine Drehmomentübertragung von der mit dem Anlaufpilz ausgestatteten Welle auf den Anlaufpilz sicherzustellen, ist der Anlaufpilz in Ausgestaltung der Erfindung mit einer Verdrehsicherung ausgestattet. Beispielsweise kann ein Einsteckabschnitt des Anlaufpilzes hierzu als Mehrkant, insbesondere als Vierkant, ausgebildet sein. Zur erleichterten Findung einer, insbesondere zentrischen, stirnseitigen Einstecköffnung in der Welle, ist es von Vorteil, wenn der Einsteckabschnitt im Bereich seines freien Endes, insbesondere im Bereich seiner Längskanten, bevorzugt unter einen Winkel von etwa 30°, angefast ist.

Der erfindungsgemäße Elektromotor zeichnet sich durch mindestens einen an einer Ankerwelle des Elektromotors festgelegten Anlaufpilz aus, wobei der Anlaufpilz mit der mindestens einen Fetttasche dafür sorgt, dass im Kontaktbereich zu einer Abstützfläche eine ausreichende Menge an Fett zur Verfügung steht, um auch im Dauerlauf des Motors eine zumindest näherungsweise gleichbleibende Motorkennlinie und im Stillstand des Elektromotors eine ausreichend hohe, zumindest näherungsweise konstante Selbsthemmung bereitzustellen.

In Ausgestaltung der Erfindung ist die Abstützfläche, an der die Anlauffläche anliegt entweder am Polgehäuse festgelegt oder wird bevorzugt unmittelbar von dem Polgehäuse des Elektromotors gebildet.

### Kurze Beschreibung der Zeichnungen

Weitere Vorteile, Merkmale und Einzelheiten der Erfindung ergeben sich aus der nachfolgenden Beschreibung eines bevorzugten Ausführungsbeispieles sowie anhand der Zeichnung; diese zeigt in der einzigen Figur eine perspektivische Darstellung eines Ankerpilzes zur Aufnahme in einer stirnseitigen Einstecköffnung einer Ankerwelle.

### Ausführungsform der Erfindung

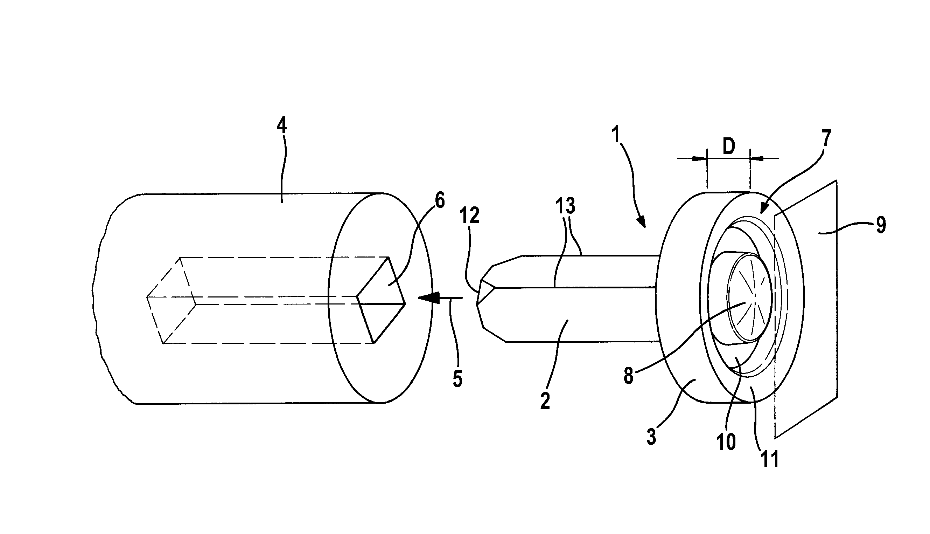

Fig. 1 zeigt einen Anlaufpilz 1 mit einem langgestreckten, stiftförmigen Einsteckabschnitt 2 und einem im Wesentlichen scheibenförmigen Kappenabschnitt 3. Die Radialerstreckung des Kappenabschnitts 3 ist dabei größer als die des Einsteckabschnitts 2 und entspricht bevorzugt zumindest näherungsweise dem Durchmesser einer mit dem Anlaufpilz 1 ausgestatteten, als Ankerwelle ausgebildeten Welle 4.

Der Einsteckabschnitt 2 dient zum Einstecken in Pfeilrichtung 5 in eine stirnseitige Einstecköffnung 6 der Welle 4. Der Einsteckabschnitt 2 ist als Vierkant ausgebildet und wirkt als Drehsicherung mit der formkongruent zum Einsteckabschnitt 2 ausgebildeten Einstecköffnung 6 zusammen.

An einer freien Stirnseite 7 des Kappenabschnitts 3 ist eine zentrische Anlauffläche 8 ausgebildet, deren Radialerstreckung etwa der Radialerstreckung des Einsteckabschnitts 2 entspricht. Die Anlauffläche 8 hat einen kreisförmigen Querschnitt und ist ballig ausgeformt, so dass der Kontaktbereich zu einer der Anlauffläche 8 gegenüberliegenden Abstützfläche 9, an der die Anlauffläche 8 im montierten Zustand anliegt, minimiert ist. Dabei ist die Abstützfläche 9 bevorzugt Teil eines Polgehäuses.

Konzentrisch umschlossen wird die Anlauffläche 8 von einer als Ringnut ausgebildeten Fetttasche 10, die im eingebauten Zustand des Anlaufpilzes 1, beispielsweise in einem Elektromotor, mit einem Fett gefüllt ist, das zum einen für eine hohe Haftreibung im Stillstand des Elektromotors und zum anderen für eine geringe Gleitreibung während des Betriebs des Elektromotors sorgt. Die Tiefe der Fetttasche 10 entspricht etwa der halben Dicke D des Kappenabschnittes 3.

Radial außen wird die Fetttasche 10 von einem umfangsgeschlossenen Umfangswulst 11 begrenzt, der nach radial innen hin in axialer Richtung abfällt und somit für eine Verbreiterung der Fetttasche in einem oberen Bereich sorgt. In einem axial daran anschließenden unteren Bereich weist die Fetttasche einen im Wesentlichen U-förmigen Querschnitt auf.

Im Bereich eines freien Endes 12 des Einsteckabschnittes 2 ist dieser im Bereich seiner Längskanten 13 unter einem Winkel von etwa 30° nach radial innen angefast, um die Montage des Anlaufpilzes 1 an der Welle 4 durch eine erleichterte Findung der Einstecköffnung 6 zu vereinfachen.

## Patentansprüche

1. Anlaufpilz mit einer stirnseitigen Anlauffläche (8) zum Abstützen einer Welle (4), insbesondere einer Ankerwelle eines Elektromotors, an einer Abstützfläche (9),
**dadurch gekennzeichnet,**
**dass** der Anlaufpilz (1) mindestens eine Fetttasche (10) aufweist.

2. Anlaufpilz nach Anspruch 1,
**dadurch gekennzeichnet,**
**dass** die Fetttasche (10) benachbart zur Anlauffläche (8) angeordnet ist.

3. Anlaufpilz nach einem der Ansprüche 1 oder 2,
**dadurch gekennzeichnet,**
**dass** die Fetttasche (10) als Ringnut ausgebildet ist.

4. Anlaufpilz nach Anspruch 3,
**dadurch gekennzeichnet,**
**dass** die Anlauffläche (8) zentrisch innerhalb der Fetttasche (10) angeordnet ist.

5. Anlaufpilz nach einem der vorhergehenden Ansprüche,
**dadurch gekennzeichnet,**
**dass** die Anlauffläche (8) ballig ausgeformt ist.

6. Anlaufpilz nach einem der Ansprüche 3 bis 5,
**dadurch gekennzeichnet,**
**dass** die Fetttasche (10) radial außen von einem Umfangswulst (11) begrenzt ist, dessen Erstreckung in axialer Richtung geringer ist als die Erstreckung der Anlauffläche (8) in axialer Richtung.

7. Anlaufpilz nach einem der vorhergehenden Ansprüche,
**dadurch gekennzeichnet,**
**dass** der Anlaufpilz (1) eine Verdrehsicherung aufweist.

8. Anlaufpilz nach einem der vorhergehenden Ansprüche,
**dadurch gekennzeichnet,**
**dass** die Fetttasche (10) mit Fett gefüllt ist.

9. Elektromotor, insbesondere Fensterhebermotor, mit einem drehfest auf einer Ankerwelle (4) angeordneten Anker und mit mindestens einem an der Ankerwelle (4) festgelegten Anlaufpilz (1) nach einem der vorhergehenden Ansprüche.

10. Elektromotor nach Anspruch 9,
**dadurch gekennzeichnet,**
**dass** die Ankerwelle (4) zumindest abschnittsweise in einem Polgehäuse angeordnet ist, und dass die Abstützfläche (9) zur Anlage der Anlauffläche (8) des Anlaufpilzes (1) einem Polgehäuse zugeordnet ist.
